(19) Europäisches Patentamt
European Patent Office
Office européen des brevets

(11) EP 4 654 611 A1

(12) **EUROPEAN PATENT APPLICATION**
published in accordance with Art. 153(4) EPC

(43) Date of publication:
**26.11.2025 Bulletin 2025/48**

(21) Application number: **24749745.6**

(22) Date of filing: **02.02.2024**

(51) International Patent Classification (IPC):
***H04R 3/00*** *(2006.01)*

(52) Cooperative Patent Classification (CPC):
**H04R 3/00**

(86) International application number:
**PCT/CN2024/075397**

(87) International publication number:
**WO 2024/160266 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.02.2023 CN 202310149294**

(71) Applicant: **Huawei Technologies Co., Ltd.**
**Shenzhen, Guangdong 518129 (CN)**

(72) Inventors:
- **ZHANG, Libin**
  **Shenzhen, Guangdong 518129 (CN)**
- **YANG, Hui**
  **Shenzhen, Guangdong 518129 (CN)**
- **YANG, Zhihua**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

# (54) DEVICE OPERATION METHOD AND APPARATUS AND ELECTRONIC DEVICE

(57) Embodiments of this application provide a device operation method and apparatus, and an electronic device. In the device operation method, after obtaining a vibration signal collected by a bone conduction microphone connected to the electronic device, the electronic device extracts a vibration signal feature of the vibration signal, and then compares the extracted vibration signal feature with a control feature stored in the electronic device. When a comparison result is that the extracted vibration signal feature matches the control feature, the electronic device performs an operation corresponding to the control feature. The vibration signal collected by the bone conduction microphone may be a bone conduction audio signal, and the bone conduction audio signal is skin vibration triggered when a nasal cavity and/or a throat of a user who uses the electronic device make/makes a specific sound. In this way, a vibration signal that is of the specific sound and that is collected by the bone conduction microphone can be used to implement an interaction operation between the bone conduction microphone and the electronic device. In addition, compared with using a voice signal, using the vibration signal of the specific sound can improve recognition accuracy and reduce recognition complexity.

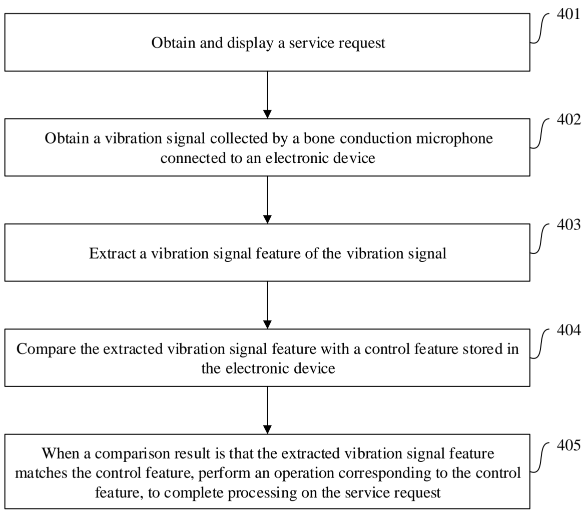


FIG. 4

EP 4 654 611 A1

## Description

This application claims priority to Chinese Patent Application No. 202310149294.3, filed with the China National Intellectual Property Administration on February 3, 2023 and entitled "DEVICE OPERATION METHOD AND APPARATUS, AND ELECTRONIC DEVICE", which is incorporated herein by reference in its entirety.

## TECHNICAL FIELD

Embodiments of this application relate to the field of intelligent terminal technologies, and in particular, to a device operation method and apparatus, and an electronic device.

## BACKGROUND

In a high-noise scenario, a sound collected by an air conduction microphone is submerged by ambient noise. As a result, a voice of a user cannot be captured, and call experience of the user is severely affected. For example, in various industrial noise scenarios, a sound is usually greater than 80 dB, and sometimes even greater than 120 dB. However, a human voice is about 70 dB and may be completely submerged in ambient noise.

A high-noise environment not only harms health but also brings difficulty to making a call.

To resolve a call problem in the high-noise environment, in the conventional technology, a communication system that is based on a bone conduction microphone is provided. The communication system requires mode control, for example, answering an incoming call when the call is to be answered. This mode control may be performed in two manners: a voice manner and a touch control manner.

Specifically, in the voice (non-contact) manner, voice information may be collected by using an air conduction microphone or a bone conduction microphone. When the air conduction microphone is used to collect a voice, if ambient noise is high, voice distortion is large, and voice recognition may be inaccurate, which affects call answering efficiency. However, when the bone conduction microphone is used to collect a voice, robustness is poor.

In the touch control (contact) manner, the user manually operates an electronic device. However, because users using bone conduction headsets and bone conduction microphones are mostly operators in the high-noise environment, for example, miners, and these operators usually need to wear gloves during operation. Therefore, it is inconvenient to operate electronic devices in a touch control manner, and operation safety is also affected.

## SUMMARY

Embodiments of this application provide a device operation method and apparatus, and an electronic device, and embodiments of this application further provide a computer-readable storage medium, to implement an interaction operation between a bone conduction microphone and an electronic device by using a vibration signal of a specific sound collected by the bone conduction microphone, thereby improving recognition accuracy and reducing recognition complexity.

According to a first aspect, embodiments of this application provide a device operation method, applied to an electronic device. The device operation method includes: obtaining and displaying a service request; obtaining a vibration signal collected by a bone conduction microphone connected to the electronic device, where the vibration signal collected by the bone conduction microphone includes a bone conduction audio signal, and the bone conduction audio signal is skin vibration triggered when a nasal cavity and/or a throat of a user who uses the electronic device make/makes a specific sound; extracting a vibration signal feature of the vibration signal; comparing the extracted vibration signal feature with a control feature stored in the electronic device; and when a comparison result is that the extracted vibration signal feature matches the control feature, performing an operation corresponding to the control feature, to complete processing on the service request.

In a possible implementation, the control feature stored in the electronic device includes a feature of a specific sound made by the nasal cavity and/or the throat.

In a possible implementation, after obtaining the vibration signal collected by the bone conduction microphone connected to the electronic device, the method further includes: performing noise reduction on the vibration signal collected by the bone conduction microphone, to obtain a vibration signal obtained through noise reduction; and extracting the vibration signal feature of the vibration signal includes: extracting a vibration signal feature of the vibration signal obtained through noise reduction.

In a possible implementation, performing noise reduction on the vibration signal collected by the bone conduction microphone, to obtain the vibration signal obtained through noise reduction includes: performing voice activity detection on the vibration signal collected by the bone conduction microphone, to obtain a noise signal in the collected vibration signal; performing Fourier transform on the collected vibration signal and the noise signal to obtain a signal spectrum of the collected vibration signal and a noise spectrum of the noise signal; obtaining, based on the signal spectrum of the collected vibration signal and the noise spectrum of the noise signal, a signal spectrum of the vibration signal obtained through noise reduction; and performing inverse Fourier transform on the signal spectrum of the vibration signal obtained through noise reduction, to obtain the vibration signal obtained through noise reduction.

In a possible implementation, extracting the vibration signal feature of the vibration signal includes: performing frame division on the vibration signal to obtain the vibration signal feature.

In a possible implementation, comparing the extracted vibration signal feature with the control feature stored in the electronic device includes: performing autocorrelation calculation on the extracted vibration signal feature and the control feature stored in the electronic device, to obtain an autocorrelation coefficient; and obtaining the comparison result between the extracted vibration signal feature and the control feature based on a comparison result between the autocorrelation coefficient and a preset threshold.

In a possible implementation, obtaining the comparison result between the extracted vibration signal feature and the control feature based on the comparison result between the autocorrelation coefficient and the preset threshold includes: if the autocorrelation coefficient is greater than or equal to the preset threshold, determining that the extracted vibration signal feature matches the control feature; if a quantity of vibration signal features whose autocorrelation coefficients are greater than or equal to the preset threshold is greater than or equal to a predetermined quantity, determining that the extracted vibration signal feature matches the control feature; or if a quantity of vibration signal features whose autocorrelation coefficients are greater than or equal to the preset threshold is greater than or equal to a predetermined quantity within predetermined duration, determining that the extracted vibration signal feature matches the control feature.

In a possible implementation, before comparing the extracted vibration signal feature with the control feature stored in the electronic device, the method further includes: enabling a function of obtaining a control feature online of the electronic device; collecting, by using the bone conduction microphone connected to the electronic device, an audio signal of a specific sound made by the nasal cavity and/or the throat of the user who uses the electronic device; disabling the function of obtaining a control feature online of the electronic device, and extracting a vibration feature of the audio signal of the specific sound; and storing the vibration feature of the audio signal of the specific sound in the electronic device as the control feature.

In a possible implementation, performing the operation corresponding to the control feature includes: performing one or a combination of the following operations: executing a pre-specified function of an application installed on the electronic device; selecting an option on the electronic device; and activating a function of the electronic device, where the function of the electronic device includes: answering a call, making a call, starting environment monitoring of a headset, or starting recording.

According to a second aspect, embodiments of this application provide a device operation apparatus. The apparatus is included in an electronic device, and the apparatus has a function of implementing behavior of the electronic device in the first aspect and the possible implementations of the first aspect. The function may be implemented by hardware, or may be implemented by executing corresponding software by hardware. The hardware or the software includes one or more modules or units corresponding to the foregoing function, for example, an obtaining module, a display module, an extraction module, a comparison module, and an execution module.

According to a third aspect, embodiments of this application provide an electronic device, including: one or more processors, a memory, a plurality of applications, and one or more computer programs, where the one or more computer programs are stored in the memory, the one or more computer programs include instructions, and when the instructions are executed by the electronic device, the electronic device is enabled to perform the following steps: obtaining and displaying a service request; obtaining a vibration signal collected by a bone conduction microphone connected to the electronic device, where the vibration signal collected by the bone conduction microphone includes a bone conduction audio signal, and the bone conduction audio signal is skin vibration triggered when a nasal cavity and/or a throat of a user who uses the electronic device make/makes a specific sound; extracting a vibration signal feature of the vibration signal; comparing the extracted vibration signal feature with a control feature stored in the electronic device; and when a comparison result is that the extracted vibration signal feature matches the control feature, performing an operation corresponding to the control feature, to complete processing on the service request.

In a possible implementation, the control feature stored in the electronic device includes a feature of a specific sound made by the nasal cavity and/or the throat.

In a possible implementation, when the instructions are executed by the electronic device, after performing the step of obtaining the vibration signal collected by the bone conduction microphone connected to the electronic device, the electronic device is further enabled to perform the following step: performing noise reduction on the vibration signal collected by the bone conduction microphone, to obtain a vibration signal obtained through noise reduction; and extracting the vibration signal feature of the vibration signal includes: extracting a vibration signal feature of the vibration signal obtained through noise reduction.

In a possible implementation, when the instructions are executed by the electronic device, that the electronic device is enabled to perform the step of performing noise reduction on the vibration signal collected by the bone conduction microphone, to obtain the vibration signal obtained through noise reduction includes: performing voice activity detection on the vibration signal collected by the bone conduction microphone, to obtain a noise signal in the collected vibration signal; performing Fourier transform on the collected vibration signal and the noise signal to obtain a signal spectrum of the collected vibration signal and a noise spectrum of the noise signal; obtaining, based on the signal spectrum of the collected vibration signal and the noise spectrum of the noise signal, a signal spectrum of the vibration signal obtained through noise reduction; and performing inverse Fourier transform on the signal spectrum of the vibration signal obtained through noise reduction, to obtain the vibration signal obtained through noise reduction.

In a possible implementation, when the instructions are executed by the electronic device, that the electronic device is enabled to perform the step of extracting the vibration signal feature of the vibration signal includes: performing frame division on the vibration signal to obtain the vibration signal feature.

In a possible implementation, when the instructions are executed by the electronic device, that the electronic device is enabled to perform the step of comparing the extracted vibration signal feature with the control feature stored in the electronic device includes: performing autocorrelation calculation on the extracted vibration signal feature and the control feature stored in the electronic device, to obtain an autocorrelation coefficient; and obtaining the comparison result between the extracted vibration signal feature and the control feature based on a comparison result between the autocorrelation coefficient and a preset threshold.

In a possible implementation, when the instructions are executed by the electronic device, that the electronic device is enabled to perform the step of obtaining the comparison result between the extracted vibration signal feature and the control feature based on the comparison result between the autocorrelation coefficient and the preset threshold includes: if the autocorrelation coefficient is greater than or equal to the preset threshold, determining that the extracted vibration signal feature matches the control feature; if a quantity of vibration signal features whose autocorrelation coefficients are greater than or equal to the preset threshold is greater than or equal to a predetermined quantity, determining that the extracted vibration signal feature matches the control feature; or if a quantity of vibration signal features whose autocorrelation coefficients are greater than or equal to the preset threshold is greater than or equal to a predetermined quantity within predetermined duration, determining that the extracted vibration signal feature matches the control feature.

In a possible implementation, when the instructions are executed by the electronic device, before performing the step of comparing the extracted vibration signal feature with the control feature stored in the electronic device, the electronic device is further enabled to perform the following steps: enabling a function of obtaining a control feature online of the electronic device; collecting, by using the bone conduction microphone connected to the electronic device, an audio signal of a specific sound made by the nasal cavity and/or the throat of the user who uses the electronic device; disabling the function of obtaining a control feature online of the electronic device, and extracting a vibration feature of the audio signal of the specific sound; and storing the vibration feature of the audio signal of the specific sound in the electronic device as the control feature.

In a possible implementation, when the instructions are executed by the electronic device, that the electronic device is enabled to perform the step of performing the operation corresponding to the control feature includes: performing one or a combination of the following operations: executing a pre-specified function of an application installed on the electronic device; selecting an option on the electronic device; and activating a function of the electronic device, where the function of the electronic device includes: answering a call, making a call, starting environment monitoring of a headset, or starting recording.

It should be understood that the technical solutions in the second and third aspects of embodiments of this application are consistent with the technical solution in the first aspect of embodiments of this application, and beneficial effect achieved by the aspects and corresponding feasible implementations are similar. Details are not described again.

According to a fourth aspect, embodiments of this application provide a computer-readable storage medium. The computer-readable storage medium stores a computer program. When the computer program is run on a computer, the computer is enabled to perform the method provided in the first aspect.

According to a fifth aspect, embodiments of this application provide a computer program. When the computer program is executed by a computer, the computer program is used to perform the method according to the first aspect.

In a possible design, some or all of programs in the fifth aspect may be stored in a storage medium encapsulated with a processor, or some or all of programs may be stored in a memory that is not encapsulated with a processor.

## BRIEF DESCRIPTION OF DRAWINGS

FIG. 1 shows a communication system that is based on a bone conduction microphone according to the conventional technology;

FIG. 2 is a diagram of a vibration signal feature according to an embodiment of this application;
FIG. 3 is a diagram of a structure of an electronic device according to an embodiment of this application;
FIG. 4 is a flowchart of a device operation method according to an embodiment of this application;
FIG. 5 is a flowchart of a device operation method according to another embodiment of this application;
FIG. 6 is a flowchart of a device operation method according to still another embodiment of this application;
FIG. 7 is a flowchart of a device operation method according to yet another embodiment of this application;
FIG. 8 is a diagram of a structure of an electronic device according to another embodiment of this application; and
FIG. 9 is a diagram of a structure of an electronic device according to still another embodiment of this application.

## DESCRIPTION OF EMBODIMENTS

The terms used in the implementations of this application are merely used to explain specific embodiments of this application, but are not intended to limit this application.

FIG. 1 shows a communication system that is based on a bone conduction microphone according to the conventional technology. As shown in FIG. 1, a voice on a side A is collected by the bone conduction microphone, which is mainly used in a scenario of a harsh environment, for example, a factory or a mine.

The communication system requires mode control, for example, answering an incoming call when the call is to be answered. There are mainly two manners for this mode control. One of the manners is a voice manner. In the voice (non-contact) manner, a wearer speaks, for example, "answer the call", and in this case, a control instruction is sent to a call answering module of a mobile phone and the call is answered. Herein, voice information may be collected by using an air conduction microphone or the bone conduction microphone. The air conduction microphone conducts vibration to a sensor through air, and collects a vibration signal and converts the vibration signal into an electrical signal. The bone conduction microphone conducts vibration to a sensor through a solid medium, for example, a bone or skin, and collects a vibration signal and converts the vibration signal into an electrical signal.

However, when ambient noise is high and voice distortion is large, using the air conduction microphone may cause a problem of inaccurate voice recognition, affecting call answering efficiency; while using the bone conduction microphone has poor robustness. Key sound recognition requires a dataset, and a common dataset is a voice collected in a quiet environment and is usually recorded by using the air conduction microphone. However, there is various noise in a mine scenario, and it is difficult to train a model. In addition, it is not easy to recollect a data set because various high-noise environments are complex and it is difficult to collect all data sets. Therefore, when a frequency domain feature is extracted through keyword recognition, the frequency domain feature is damaged in the high-noise environment. Consequently, effect of a trained model on the bone conduction microphone is reduced.

The other manner is a touch control (contact) manner. In the touch control manner, the wearer manually performs control, for example, taps or slides on a screen of the mobile phone by using a finger, and in this case, a control instruction is sent to the call answering module of the mobile phone and the call is answered.

However, because users using bone conduction headsets and bone conduction microphones are mostly operators in the high-noise environment, for example, miners, and these operators usually need to wear gloves during operation, it is inconvenient to operate electronic devices in a touch control manner, and operation safety is also affected.

In view of the foregoing problems, the following first focuses on and performs in-depth analysis on a vibration manner of a human body and a vibration collection means.

It is difficult to use the air conduction microphone to record chewing and coughing, because noise sensitivity of the air conduction microphone may cause a mobile device to fail to detect automatically. In comparison, a bone conduction sensor can record vibration of a head bone by using a mine headset sensor.

A voice is mainly produced by air vibration, the air vibration is jointly produced by vocal organs, and a vibration wave in an airway is transmitted to an auditory system through soft tissues in a vocal tract and bones in a skull.

A chewing sound is produced by motions that include a motion of a subtemporal lumbar joint. These motions cause a lower lumbar bone to move to drive a connecting rod, leading to a cutting, grinding and tearing process between teeth and food. During this process, waves generated by collision and grinding are transmitted to the human auditory system.

Similar to a process of producing a voice, a cough is a process of intense exhalation and rapid breathing caused by irritation of a throat or a tracheal mucosa. In this process, a vocal cord vibrates and produces a sound. A cough is a sudden blast of air from lungs, and the blast of air passes through soft tissues of a mouth and the skull to the human auditory system.

FIG. 2 is a diagram of a vibration signal feature according to an embodiment of this application. Through analysis of features of these vibration signals in FIG. 2, it is not difficult to find that, compared with a voice signal, a pulse signal similar to a chewing signal, a cough signal, a hum signal, and/or the like has an obvious feature and is more suitable for signal processing and recognition than the voice signal.

In view of this, embodiments of this application provide a device operation method, to implement an interaction operation between a bone conduction microphone and an electronic device by using a vibration signal of a specific sound collected by the bone conduction microphone, thereby improving recognition accuracy and reducing recognition complexity.

The device operation method provided in embodiments of this application may be applied to the electronic device. The electronic device may be a smartphone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or another device. A specific type of the electronic device is not limited in embodiments of this application.

For example, FIG. 3 is a diagram of a structure of the electronic device according to an embodiment of this application. As shown in FIG. 3, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, DCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component, for example, the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement an image shooting function of the electronic device 100. The processor 110 communicates with the display 194 through the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be configured to connect to a charger to charge the electronic device 100, or may be configured to transmit data between the electronic device 100 and a peripheral device, or may be configured to connect to a headset for playing audio by using the headset. Alternatively, the port may be configured to connect to another electronic device, for example, an AR device.

It may be understood that an interface connection relationship between the modules that is shown in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB port 130. In some embodiments of wireless charging, the charging management module 140 may receive a wireless charging input through a wireless charging coil of the electronic device 100. When charging the battery 142, the charging management module 140 may further supply power to the electronic device 100 by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna in a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in a same component.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, and the like), or displays an image or a video by using the display 194. In some embodiments, the modem processor may be an independent component. In some other embodiments, the modem processor may be independent of the processor 110, and may be disposed in a same component as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing and is connected to the display 194 and the application processor. The GPU is configured to perform mathematical and geometric computation for graphic rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194. N is a positive integer greater than 1.

The electronic device 100 may implement an image shooting function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193. N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. The NPU may be used to implement applications such as intelligent cognition of the electronic device 100, for example, image recognition, facial recognition, voice recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage component, a flash memory component, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The electronic device 100 may be used for listening to music or answering a hands-free call by using the speaker 170A.

The receiver 170B, also referred to as an "earpiece", is configured to convert an audio electrical signal into a sound signal. When a call is answered or voice information is received by using the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound by using a human mouth close to the microphone 170C, and input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be a USB port 130, or may be a 3.5 mm open mobile electronic device platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change of the capacitance. When a touch operation is performed on the display 194, the electronic device 100 detects intensity of the touch operation by using the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to a first pressure threshold is performed on an SMS message application icon, an instruction for creating a new SMS message is performed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during image shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a flip phone, the electronic device 100 may detect opening and closing of a flip cover by using the magnetic sensor 180D. Further, a feature, for example, automatic unlocking of the flip cover, is set based on a detected opening or closing state of a leather case or a detected opening or closing state of the flip cover.

The acceleration sensor 180E may detect accelerations in various directions (usually on three axes) of the electronic device 100. When the electronic device 100 is stationary, a magnitude and a direction of gravity may be detected. The acceleration sensor may be further configured to identify a posture of the electronic device, and is used in screen switching between a landscape mode and a portrait mode, a pedometer, or another application.

The distance sensor 180F is configured to measure a distance. The electronic device 100 may measure a distance in an infrared manner or a laser manner. In some embodiments, in an image shooting scene, the electronic device 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application access lock, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 reduces performance of a processor nearby the temperature sensor 180J, to reduce power consumption for thermal protection. In some other embodiments, when the temperature is lower than another threshold, the electronic device 100 heats the battery 142, so that the electronic device 100 is prevented from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to form a bone conduction headset in combination with the headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with an external memory card. The electronic device 100 interacts with a network by using the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

For ease of understanding, in the following embodiments of this application, the device operation method provided in embodiments of this application is specifically described with reference to the accompanying drawings by using the electronic device with the structure shown in FIG. 3 as an example.

FIG. 4 is a flowchart of a device operation method according to an embodiment of this application. As shown in FIG. 4, the device operation method may include the following steps.

Step 401: Obtain and display a service request.

Specifically, after obtaining the service request, an electronic device may display the service request on a screen of the electronic device. For example, the service request may be a call request. After obtaining the service request, the electronic device may display the service request on the screen of the electronic device.

Step 402: Obtain a vibration signal collected by a bone conduction microphone connected to the electronic device.

The vibration signal collected by the bone conduction microphone may include a bone conduction audio signal, and the bone conduction audio signal is skin vibration triggered when a nasal cavity and/or a throat of a user who uses the electronic device make/makes a specific sound.

Specifically, the bone conduction audio signal may be an audio signal present when the nasal cavity and/or the throat of the user make/makes a sound of a cough or a hum. Spectral flatness of a frequency domain signal feature of the cough or the hum is greater than 0.8, a time domain is similar to that of a pulse signal, and short-term energy is 50% greater than that of a voice signal.

The spectrum flatness (also referred to as Wiener entropy) is defined as a ratio of a geometric average value of a spectrum to an arithmetic average value of the spectrum, as shown in Formula (1).

$$\text{Flatness} = \frac{\sqrt[N]{\prod_{n=0}^{N-1} x(n)}}{\frac{\sum_{n=0}^{N-1} x(n)}{N}} = \frac{\exp\left(\frac{1}{N}\sum_{n=0}^{N-1} \ln x(n)\right)}{\frac{1}{N}\sum_{n=0}^{N-1} x(n)} \quad (1)$$

Spectral flatness of a typical voice is less than 0.6, and spectral flatness of a typical hum or cough is greater than 0.8.

Because the voice signal has short-term stability, the short-term energy of the voice signal is usually far less than that of a hum signal, a cough signal, a chewing signal, or the like. As shown in FIG. 2, short-term energy of a hum or a cough is more than 50% greater than that of the voice signal.

Step 403: Extract a vibration signal feature of the vibration signal.

Specifically, extracting the vibration signal feature of the vibration signal may be: performing frame division on the vibration signal to obtain the vibration signal feature.

Step 404: Compare the extracted vibration signal feature with a control feature stored in the electronic device.

The control feature stored in the electronic device includes a feature of a specific sound made by the nasal cavity and/or the throat. Specifically, the specific sound may be a sound of a cough or a hum.

Step 405: When a comparison result is that the extracted vibration signal feature matches the control feature, perform an operation corresponding to the control feature, to complete processing on the service request.

Specifically, performing the operation corresponding to the control feature may be: performing one or a combination of the following operations:

executing a pre-specified function of an application installed on the electronic device;
selecting an option on the electronic device; and
activating a function of the electronic device, where the function of the electronic device may include: answering a call, making a call, starting environment monitoring of a headset, starting recording, or the like.

Answering a call is still used as an example. After displaying the service request in step 401, and after performing step 402 to step 405, the electronic device may perform an operation of answering the call.

In the device operation method, after obtaining the vibration signal collected by the bone conduction microphone connected to the electronic device, the electronic device extracts the vibration signal feature of the vibration signal, and then compares the extracted vibration signal feature with the control feature stored in the electronic device. When the comparison result is that the extracted vibration signal feature matches the control feature, the electronic device performs the operation corresponding to the control feature. The vibration signal collected by the bone conduction microphone may be the bone conduction audio signal, and the bone conduction audio signal is the skin vibration triggered when the nasal cavity and/or the throat of the user who uses the electronic device make/makes the specific sound. In this way, a vibration signal that is of the specific sound and that is collected by the bone conduction microphone can be used to implement an interaction operation between a bone conduction microphone and an electronic device. In addition, compared with using a voice signal, using the vibration signal of the specific sound can improve recognition accuracy and reduce recognition complexity.

FIG. 5 is a flowchart of a device operation method according to another embodiment of this application. As shown in FIG. 5, in the embodiment shown in FIG. 4 in this application, after step 402, the method may further include the following steps.

Step 501: Perform noise reduction on the vibration signal collected by the bone conduction microphone, to obtain a vibration signal obtained through noise reduction.

In this way, step 403 may be as follows.

Step 502: Extract a vibration signal feature of the vibration signal obtained through noise reduction.

Specifically, performing noise reduction on the vibration signal collected by the bone conduction microphone, to obtain the vibration signal obtained through noise reduction may include the following steps.

Step a: Perform voice activity detection (voice activity detection, VAD) on the vibration signal collected by the bone conduction microphone, to obtain a noise signal in the collected vibration signal.

Specifically, audio processing is performed frame by frame in chronological order, for example, 20 ms per frame. For each frame of signal, it may be detected whether the frame of signal is a voice signal. If the frame of signal is not the voice signal, the frame of signal may be considered as a noise signal, and the frame of noise signal may be used as noise n(t) for subsequent audio processing; or a plurality of frames of noise signals may be averaged as noise for subsequent audio processing. During specific implementation, the noise signal may be refreshed at predetermined intervals.

Step b: Perform Fourier transform (Fourier transform, FT) on the collected vibration signal and the noise signal to obtain a signal spectrum of the collected vibration signal and a noise spectrum of the noise signal.

FT is performed on the collected vibration signal x(t), so that the signal spectrum X(w) of the vibration signal may be obtained; and FT is performed on the noise signal, so that the noise spectrum N(w) of the noise signal may be obtained.

Step c: Obtain, based on the signal spectrum of the collected vibration signal and the noise spectrum of the noise signal, a signal spectrum of the vibration signal obtained through noise reduction.

Specifically, the noise spectrum of the noise signal may be subtracted from the signal spectrum of the collected vibration signal, to obtain the signal spectrum of the vibration signal obtained through noise reduction, as shown in Formula (2).

$$S(w)=X(w)-N(w) \qquad (2)$$

In Formula (2), S(w) is the signal spectrum of the vibration signal obtained through noise reduction.

Step d: Perform inverse Fourier transform on the signal spectrum of the vibration signal obtained through noise reduction, to obtain the vibration signal obtained through noise reduction.

Specifically, inverse Fourier transform may be performed on S(w), to obtain the vibration signal s(t) obtained through noise reduction.

It should be noted that, in step b, fast Fourier transform (fast Fourier transform, FFT) may alternatively be performed on the collected vibration signal and the noise signal, to obtain the signal spectrum of the collected vibration signal and the noise spectrum of the noise signal; and then in step d, inverse fast Fourier transform (inverse fast Fourier transform, IFFT) is performed on the signal spectrum of the vibration signal obtained through noise reduction, to obtain the vibration signal.

FIG. 6 is a flowchart of a device operation method according to still another embodiment of this application. As shown in FIG. 6, in the embodiment shown in FIG. 4 in this application, step 404 may include the following steps.

Step 601: Perform autocorrelation calculation on the extracted vibration signal feature and the control feature stored in the electronic device, to obtain an autocorrelation coefficient.

Step 602: Obtain the comparison result between the extracted vibration signal feature and the control feature based on a comparison result between the autocorrelation coefficient and a preset threshold.

Specifically, obtaining the comparison result between the extracted vibration signal feature and the control feature based on the comparison result between the autocorrelation coefficient and the preset threshold may be:

if the autocorrelation coefficient is greater than or equal to the preset threshold, determining that the extracted vibration signal feature matches the control feature;

if a quantity of vibration signal features whose autocorrelation coefficients are greater than or equal to the preset threshold is greater than or equal to a predetermined quantity, determining that the extracted vibration signal feature matches the control feature; or

if a quantity of vibration signal features whose autocorrelation coefficients are greater than or equal to the preset threshold is greater than or equal to a predetermined quantity within predetermined duration, determining that the extracted vibration signal feature matches the control feature.

The preset threshold may be independently set based on system performance and/or an implementation requirement during specific implementation. The preset threshold is not limited in this embodiment. The predetermined quantity may be set based on system performance and/or an implementation requirement during specific implementation. The predetermined quantity is not limited in this embodiment. For example, the predetermined quantity may be 3. The predetermined duration may be set based on system performance and/or an implementation requirement during specific implementation. The predetermined duration is not limited in this embodiment.

FIG. 7 is a flowchart of a device operation method according to yet another embodiment of this application. As shown in FIG. 7, in the embodiment shown in FIG. 4 in this application, before step 404, the method may further include the following steps.

Step 701: Enable a function of obtaining a control feature online of the electronic device.

Step 702: Collect, by using the bone conduction microphone connected to the electronic device, an audio signal of a specific sound made by the nasal cavity and/or the throat of the user who uses the electronic device.

Step 703: Disable the function of obtaining a control feature online of the electronic device, and extract a vibration feature of the audio signal of the specific sound.

Step 704: Store the vibration feature of the audio signal of the specific sound in the electronic device as the control feature.

In other words, in this embodiment of this application, the control feature may be obtained online. A wearer wears the bone conduction microphone, and then enables the function of obtaining a control feature online of the electronic device. The wearer coughs or makes a "hum" sound. The electronic device collects an audio signal of a cough or the hum of the wearer by using the bone conduction microphone, and then disables the function of obtaining a control feature online of the electronic device, extracts a vibration feature of the audio signal, and stores the vibration feature in the electronic device.

A use scenario of this embodiment of this application may be triggered by a service. To be specific, after obtaining the service request, the electronic device displays the service request on the screen of the electronic device. Then, the user wears the bone conduction microphone. After viewing the service request, the user makes the specific sound by using the nasal cavity and/or the throat. In this way, the electronic device may obtain the vibration signal collected by the bone conduction microphone connected to the electronic device, and then perform a subsequent procedure, to complete processing on the service request. For example, after receiving a call request, the electronic device may display the call request on the screen of the electronic device. Then, the user wears the bone conduction microphone. After viewing the call request, the user makes a specific sound by using the nasal cavity and/or the throat. In this way, the electronic device may obtain a vibration signal collected by the bone conduction microphone connected to the electronic device, and then perform a subsequent procedure, so that the call request can be answered or rejected.

It can be understood that some or all of the steps or operations in the foregoing embodiments are merely examples, and other operations or variants of various operations may be further performed in embodiments of this application. In addition, the steps may be performed in another order different from that presented in the foregoing embodiments, and not all the operations in the foregoing embodiments may be performed.

It may be understood that, to implement the foregoing functions, the electronic device includes corresponding hardware and/or software modules for performing the functions. With reference to algorithm steps of examples described in embodiments disclosed in this application, this application can be implemented in a form of hardware or a combination of hardware and computer software. Whether a function is performed by hardware or hardware driven by computer software depends on specific applications and design constraints of the technical solutions. A person skilled in the art may use different methods to implement the described functions for each specific application with reference to embodiments. However, it should not be considered that the implementation goes beyond the scope of this application.

In this embodiment, the electronic device may be divided into function modules according to the foregoing method embodiments. For example, each function module may be obtained through division based on each corresponding function, or two or more functions may be integrated into one module. The integrated module may be implemented in a form of hardware. It should be noted that, in embodiments, module division is an example and is merely logical function division. During actual implementation, there may be another division manner.

FIG. 8 is a diagram of a structure of an electronic device according to another embodiment of this application. When function modules are obtained through division based on corresponding functions, FIG. 8 is a diagram of possible composition of the electronic device 800 in the foregoing embodiment. As shown in FIG. 8, the electronic device 800 may include an obtaining module 801, a display module 802, an extraction module 803, a comparison module 804, and an execution module 805.

The obtaining module 801 is configured to obtain a service request.

The display module 802 is configured to display the service request.

The obtaining module 801 is further configured to: obtain a vibration signal collected by a bone conduction microphone connected to the electronic device, where the vibration signal collected by the bone conduction microphone includes a bone conduction audio signal, and the bone conduction audio signal is skin vibration triggered when a nasal cavity and/or a throat of a user who uses the electronic device make/makes a specific sound.

The extraction module 803 is configured to extract a vibration signal feature of the vibration signal.

The comparison module 804 is configured to compare, with a control feature stored in the electronic device, the vibration signal feature extracted by the extraction module 803.

The execution module 805 is configured to: when a comparison result is that the extracted vibration signal feature matches the control feature, perform an operation corresponding to the control feature, to complete processing on the service request.

It should be noted that all related content of the steps in the method embodiments shown in FIG. 4 in this application may be cited in function descriptions of corresponding function modules. Details are not described herein again.

The electronic device 800 provided in this embodiment is configured to perform the device operation method provided in the embodiment shown in FIG. 4 in this application, and therefore can achieve same effect as the foregoing method.

FIG. 9 is a diagram of a structure of an electronic device according to still another embodiment of this application. In comparison with the electronic device shown in FIG. 8, a difference lies in that, in this embodiment, the electronic device 800 may further include a noise reduction module 806.

The noise reduction module 806 is configured to: after the obtaining module 801 obtains the vibration signal collected by the bone conduction microphone connected to the electronic device, perform noise reduction on the vibration signal collected by the bone conduction microphone, to obtain a vibration signal obtained through noise reduction. In this way, the extraction module 803 is specifically configured to extract a vibration signal feature of the vibration signal obtained through noise reduction.

Specifically, the noise reduction module 806 may include a detection submodule 8061, a transformation submodule 8062, and an obtaining submodule 8063.

The detection submodule 8061 is configured to perform voice activity detection on the vibration signal collected by the bone conduction microphone, to obtain a noise signal in the collected vibration signal.

The transformation submodule 8062 is configured to perform Fourier transform on the collected vibration signal and the noise signal to obtain a signal spectrum of the collected vibration signal and a noise spectrum of the noise signal.

The obtaining submodule 8063 is configured to obtain, based on the signal spectrum of the collected vibration signal and the noise spectrum of the noise signal, a signal spectrum of the vibration signal obtained through noise reduction.

The transformation submodule 8062 is further configured to perform inverse Fourier transform on the signal spectrum of the vibration signal obtained through noise reduction, to obtain the vibration signal obtained through noise reduction.

In this embodiment, the extraction module 803 is specifically configured to perform frame division on the vibration signal to obtain the vibration signal feature.

The comparison module 804 is specifically configured to: perform autocorrelation calculation on the extracted vibration signal feature and the control feature stored in the electronic device, to obtain an autocorrelation coefficient; and obtain the comparison result between the extracted vibration signal feature and the control feature based on a comparison result between the autocorrelation coefficient and a preset threshold.

During specific implementation, the comparison module 804 is specifically configured to: if the autocorrelation coefficient is greater than or equal to the preset threshold, determine that the extracted vibration signal feature matches the control feature; if a quantity of vibration signal features whose autocorrelation coefficients are greater than or equal to the preset threshold is greater than or equal to a predetermined quantity, determine that the extracted vibration signal feature matches the control feature; or if a quantity of vibration signal features whose autocorrelation coefficients are greater than or equal to the preset threshold is greater than or equal to a predetermined quantity within predetermined duration, determine that the extracted vibration signal feature matches the control feature.

Further, the electronic device 800 may further include an enabling module 807, a collection module 808, a disabling module 809, and a storing module 810.

The enabling module 807 is configured to: before the comparison module 804 compares the extracted vibration signal feature with the control feature stored in the electronic device, enable a function of obtaining a control feature online of the electronic device.

The collection module 808 is configured to collect, by using the bone conduction microphone connected to the electronic device, an audio signal of a specific sound made by the nasal cavity and/or the throat of the user who uses the electronic device.

The disabling module 809 is configured to disable the function of obtaining a control feature online of the electronic device.

The extraction module 803 is further configured to extract a vibration feature of the audio signal of the specific sound.

The storing module 810 is configured to store the vibration feature of the audio signal of the specific sound in the electronic device as the control feature.

In this embodiment, that the execution module 805 is specifically configured to execute the operation corresponding to the control feature includes:
performing one or a combination of the following operations:

executing a pre-specified function of an application installed on the electronic device;
selecting an option on the electronic device; and
activating a function of the electronic device, where the function of the electronic device includes: answering a call, making a call, starting environment monitoring of a headset, or starting recording.

It should be noted that all related content of the steps in the method embodiments shown in FIG. 4 to FIG. 7 in this application may be cited in function descriptions of corresponding function modules. Details are not described herein again.

The electronic device 800 provided in this embodiment is configured to perform the device operation method provided in embodiments shown in FIG. 4 to FIG. 7 in this application, and therefore can achieve same effect as the foregoing method.

It should be understood that the electronic device 800 may correspond to the electronic device 100 shown in FIG.

3. Functions of the obtaining module 801, the extraction module 803, the comparison module 804, the execution module 805, the noise reduction module 806, the enabling module 807, the collection module 808, the disabling module 809, and the storing module 810 may be implemented by the processor 110 in the electronic device 100 shown in FIG. 3. Functions of the display module 802 may be implemented by the processor 110 and the display 194 in the electronic device 100 shown in FIG. 3.

When an integrated unit is used, the electronic device 800 may include a processing module, a storage module, and a communication module.

The processing module may be configured to control and manage an action of the electronic device 800. For example, the processing module may be configured to support the electronic device 800 in performing the steps performed by the obtaining module 801, the display module 802, the extraction module 803, the comparison module 804, the execution module 805, the noise reduction module 806, the enabling module 807, the collection module 808, the disabling module 809, and the storing module 810. The storage module may be configured to support the electronic device 800 in storing program code, data, and the like. The communication module may be configured to support the electronic device 800 in communicating with another device.

The processing module may be a processor or a controller, and may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, and/or a Wi-Fi chip, that interacts with another electronic device.

In an embodiment, when the processing module is a processor, and the storage module is a memory, the electronic device 800 in this embodiment may be a device with the structure shown in FIG. 3.

Embodiments of this application further provide a computer-readable storage medium. The computer-readable storage medium stores a computer program. When the computer program is run on a computer, the computer is enabled to perform the method provided in embodiments shown in FIG. 4 to FIG. 7 in this application.

Embodiments of this application further provide a computer program product. The computer program product includes a computer program. When the computer program is run on a computer, the computer is enabled to perform the method provided in embodiments shown in FIG. 4 to FIG. 7 in this application.

In embodiments of this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following" or a similar expression thereof indicates any combination of these items, including a single item or any combination of a plurality of items. For example, at least one of a, b, or c may indicate a, b, c, a and b, a and c, b and c, or a, b, and c, where a, b, and c may be singular or plural.

A person of ordinary skill in the art may be aware that the units and algorithm steps described in embodiments disclosed in this specification can be implemented by a combination of electronic hardware, computer software, and electronic hardware. Whether the functions are performed by hardware or software depends on specific applications and design constraints of the technical solutions. A person skilled in the art may use different methods to implement the described functions for each specific application. However, it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of software functional unit and sold or used as an independent product, the function may be stored in a computer-readable storage medium. Based on such an understanding, the technical solutions of this application essentially, or a part contributing to the conventional technology, or some of the technical solutions may be implemented in a form of software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of embodiments of this application. Any variation or replacement readily figured out by a person skilled in the art within the technical scope disclosed in this application shall fall within the protection scope in embodiments of this application. Therefore, the protection scope of this application shall be subject to the protection scope of the claims.

## Claims

1. A device operation method, applied to an electronic device, wherein the device operation method comprises:

   obtaining and displaying a service request;
   obtaining a vibration signal collected by a bone conduction microphone connected to the electronic device, wherein the vibration signal collected by the bone conduction microphone comprises a bone conduction audio signal, and the bone conduction audio signal is skin vibration triggered when a nasal cavity and/or a throat of a user who uses the electronic device make/makes a specific sound;
   extracting a vibration signal feature of the vibration signal;
   comparing the extracted vibration signal feature with a control feature stored in the electronic device; and
   when a comparison result is that the extracted vibration signal feature matches the control feature, performing an operation corresponding to the control feature, to complete processing on the service request.

2. The method according to claim 1, wherein the control feature stored in the electronic device comprises a feature of a specific sound made by the nasal cavity and/or the throat.

3. The method according to claim 1, wherein after obtaining the vibration signal collected by the bone conduction microphone connected to the electronic device, the method further comprises:

   performing noise reduction on the vibration signal collected by the bone conduction microphone, to obtain a vibration signal obtained through noise reduction; and
   extracting the vibration signal feature of the vibration signal comprises:
   extracting a vibration signal feature of the vibration signal obtained through noise reduction.

4. The method according to claim 3, wherein performing noise reduction on the vibration signal collected by the bone conduction microphone, to obtain the vibration signal obtained through noise reduction comprises:

   performing voice activity detection on the vibration signal collected by the bone conduction microphone, to obtain a noise signal in the collected vibration signal;
   performing Fourier transform on the collected vibration signal and the noise signal to obtain a signal spectrum of the collected vibration signal and a noise spectrum of the noise signal;
   obtaining, based on the signal spectrum of the collected vibration signal and the noise spectrum of the noise signal, a signal spectrum of the vibration signal obtained through noise reduction; and
   performing inverse Fourier transform on the signal spectrum of the vibration signal obtained through noise reduction, to obtain the vibration signal obtained through noise reduction.

5. The method according to claim 1 or 3, wherein extracting the vibration signal feature of the vibration signal comprises: performing frame division on the vibration signal to obtain the vibration signal feature.

6. The method according to claim 1, wherein comparing the extracted vibration signal feature with the control feature stored in the electronic device comprises:

   performing autocorrelation calculation on the extracted vibration signal feature and the control feature stored in the electronic device, to obtain an autocorrelation coefficient; and
   obtaining the comparison result between the extracted vibration signal feature and the control feature based on a comparison result between the autocorrelation coefficient and a preset threshold.

7. The method according to claim 6, wherein obtaining the comparison result between the extracted vibration signal feature and the control feature based on the comparison result between the autocorrelation coefficient and the preset threshold comprises:

   if the autocorrelation coefficient is greater than or equal to the preset threshold, determining that the extracted vibration signal feature matches the control feature;
   if a quantity of vibration signal features whose autocorrelation coefficients are greater than or equal to the preset threshold is greater than or equal to a predetermined quantity, determining that the extracted vibration signal feature matches the control feature; or
   if a quantity of vibration signal features whose autocorrelation coefficients are greater than or equal to the preset threshold is greater than or equal to a predetermined quantity within predetermined duration, determining that the extracted vibration signal feature matches the control feature.

**8.** The method according to claim 1, wherein before comparing the extracted vibration signal feature with the control feature stored in the electronic device, the method further comprises:

enabling a function of obtaining a control feature online of the electronic device;
collecting, by using the bone conduction microphone connected to the electronic device, an audio signal of a specific sound made by the nasal cavity and/or the throat of the user who uses the electronic device;
disabling the function of obtaining a control feature online of the electronic device, and extracting a vibration feature of the audio signal of the specific sound; and
storing the vibration feature of the audio signal of the specific sound in the electronic device as the control feature.

**9.** The method according to claim 1, wherein performing the operation corresponding to the control feature comprises: performing one or a combination of the following operations:

executing a pre-specified function of an application installed on the electronic device;
selecting an option on the electronic device; and
activating a function of the electronic device, wherein the function of the electronic device comprises: answering a call, making a call, starting environment monitoring of a headset, or starting recording.

**10.** A device operation apparatus, comprising:

an obtaining module, configured to obtain a service request;
a display module, configured to display the service request, wherein
the obtaining module is further configured to: obtain a vibration signal collected by a bone conduction microphone connected to an electronic device, wherein the vibration signal collected by the bone conduction microphone comprises a bone conduction audio signal, and the bone conduction audio signal is skin vibration triggered when a nasal cavity and/or a throat of a user who uses the electronic device make/makes a specific sound;
an extraction module, configured to extract a vibration signal feature of the vibration signal;
a comparison module, configured to compare, with a control feature stored in the electronic device, the vibration signal feature extracted by the extraction module; and
an execution module, configured to: when a comparison result is that the extracted vibration signal feature matches the control feature, perform an operation corresponding to the control feature, to complete processing on the service request.

**11.** An electronic device, comprising:
one or more processors, a memory, a plurality of applications, and one or more computer programs, wherein the one or more computer programs are stored in the memory, the one or more computer programs comprise instructions, and when the instructions are executed by the electronic device, the electronic device is enabled to perform the following steps:

obtaining and displaying a service request;
obtaining a vibration signal collected by a bone conduction microphone connected to the electronic device, wherein the vibration signal collected by the bone conduction microphone comprises a bone conduction audio signal, and the bone conduction audio signal is skin vibration triggered when a nasal cavity and/or a throat of a user who uses the electronic device make/makes a specific sound;
extracting a vibration signal feature of the vibration signal;
comparing the extracted vibration signal feature with a control feature stored in the electronic device; and
when a comparison result is that the extracted vibration signal feature matches the control feature, performing an operation corresponding to the control feature, to complete processing on the service request.

**12.** The electronic device according to claim 11, wherein the control feature stored in the electronic device comprises a feature of a specific sound made by the nasal cavity and/or the throat.

**13.** The electronic device according to claim 11, wherein when the instructions are executed by the electronic device, after performing the step of obtaining the vibration signal collected by the bone conduction microphone connected to the electronic device, the electronic device is further enabled to perform the following step:

performing noise reduction on the vibration signal collected by the bone conduction microphone, to obtain a vibration signal obtained through noise reduction; and
extracting the vibration signal feature of the vibration signal comprises:
extracting a vibration signal feature of the vibration signal obtained through noise reduction.

**14.** The electronic device according to claim 13, wherein when the instructions are executed by the electronic device, that the electronic device is enabled to perform the step of performing noise reduction on the vibration signal collected by the bone conduction microphone, to obtain the vibration signal obtained through noise reduction comprises:

performing voice activity detection on the vibration signal collected by the bone conduction microphone, to obtain a noise signal in the collected vibration signal;
performing Fourier transform on the collected vibration signal and the noise signal to obtain a signal spectrum of the collected vibration signal and a noise spectrum of the noise signal;
obtaining, based on the signal spectrum of the collected vibration signal and the noise spectrum of the noise signal, a signal spectrum of the vibration signal obtained through noise reduction; and
performing inverse Fourier transform on the signal spectrum of the vibration signal obtained through noise reduction, to obtain the vibration signal obtained through noise reduction.

**15.** The electronic device according to claim 11 or 13, wherein when the instructions are executed by the electronic device, that the electronic device is enabled to perform the step of extracting the vibration signal feature of the vibration signal comprises:
performing frame division on the vibration signal to obtain the vibration signal feature.

**16.** The electronic device according to claim 11, wherein when the instructions are executed by the electronic device, that the electronic device is enabled to perform the step of comparing the extracted vibration signal feature with the control feature stored in the electronic device comprises:

performing autocorrelation calculation on the extracted vibration signal feature and the control feature stored in the electronic device, to obtain an autocorrelation coefficient; and
obtaining the comparison result between the extracted vibration signal feature and the control feature based on a comparison result between the autocorrelation coefficient and a preset threshold.

**17.** The electronic device according to claim 16, wherein when the instructions are executed by the electronic device, that the electronic device is enabled to perform the step of obtaining the comparison result between the extracted vibration signal feature and the control feature based on the comparison result between the autocorrelation coefficient and the preset threshold comprises:

if the autocorrelation coefficient is greater than or equal to the preset threshold, determining that the extracted vibration signal feature matches the control feature;
if a quantity of vibration signal features whose autocorrelation coefficients are greater than or equal to the preset threshold is greater than or equal to a predetermined quantity, determining that the extracted vibration signal feature matches the control feature; or
if a quantity of vibration signal features whose autocorrelation coefficients are greater than or equal to the preset threshold is greater than or equal to a predetermined quantity within predetermined duration, determining that the extracted vibration signal feature matches the control feature.

**18.** The electronic device according to claim 11, wherein when the instructions are executed by the electronic device, before performing the step of comparing the extracted vibration signal feature with the control feature stored in the electronic device, the electronic device is further enabled to perform the following steps:

enabling a function of obtaining a control feature online of the electronic device;
collecting, by using the bone conduction microphone connected to the electronic device, an audio signal of a specific sound made by the nasal cavity and/or the throat of the user who uses the electronic device;
disabling the function of obtaining a control feature online of the electronic device, and extracting a vibration feature of the audio signal of the specific sound; and
storing the vibration feature of the audio signal of the specific sound in the electronic device as the control feature.

**19.** The electronic device according to claim 11, wherein when the instructions are executed by the electronic device, that the electronic device is enabled to perform the step of performing the operation corresponding to the control feature comprises:
performing one or a combination of the following operations:

executing a pre-specified function of an application installed on the electronic device;
selecting an option on the electronic device; and
activating a function of the electronic device, wherein the function of the electronic device comprises: answering a call, making a call, starting environment monitoring of a headset, or starting recording.

**20.** A computer-readable storage medium, wherein the computer-readable storage medium stores a computer program, and when the computer program is run on a computer, the computer is enabled to perform the method according to any one of claims 1 to 9.

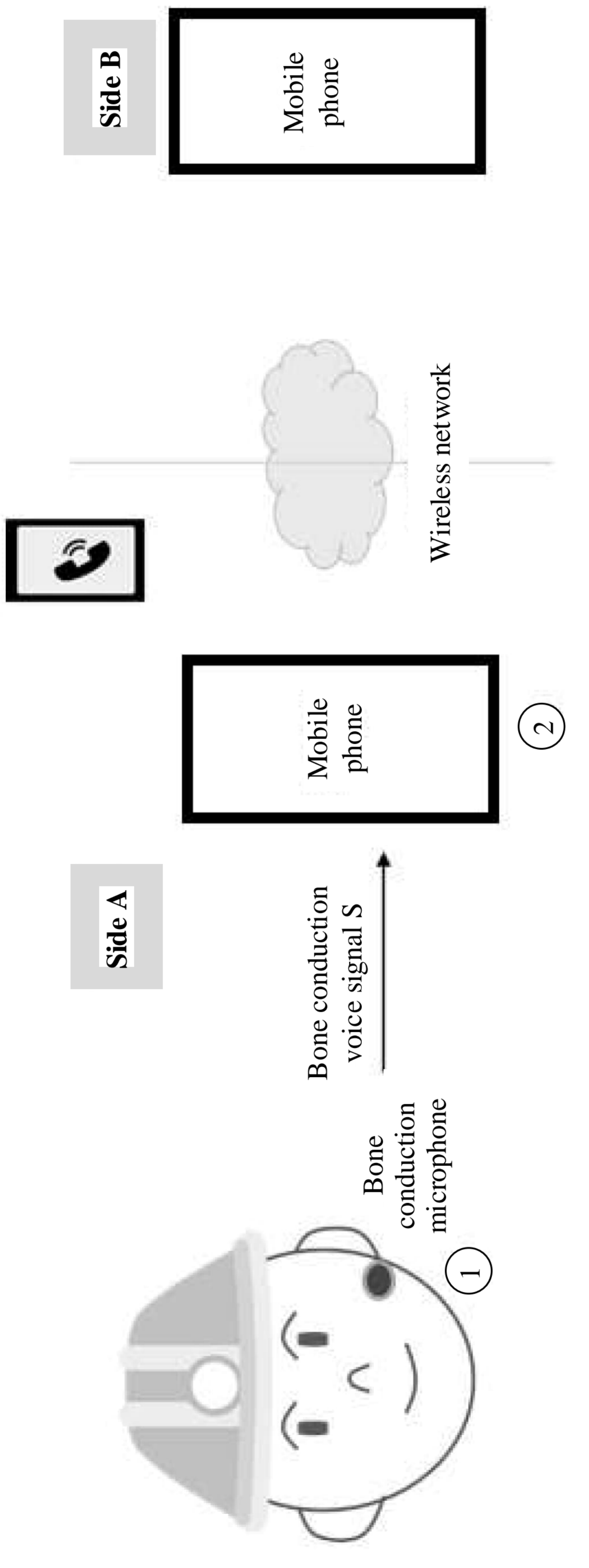
Side B
Mobile phone
Wireless network
Mobile phone
2
Side A
Bone conduction voice signal S
Bone conduction microphone
1

FIG. 1

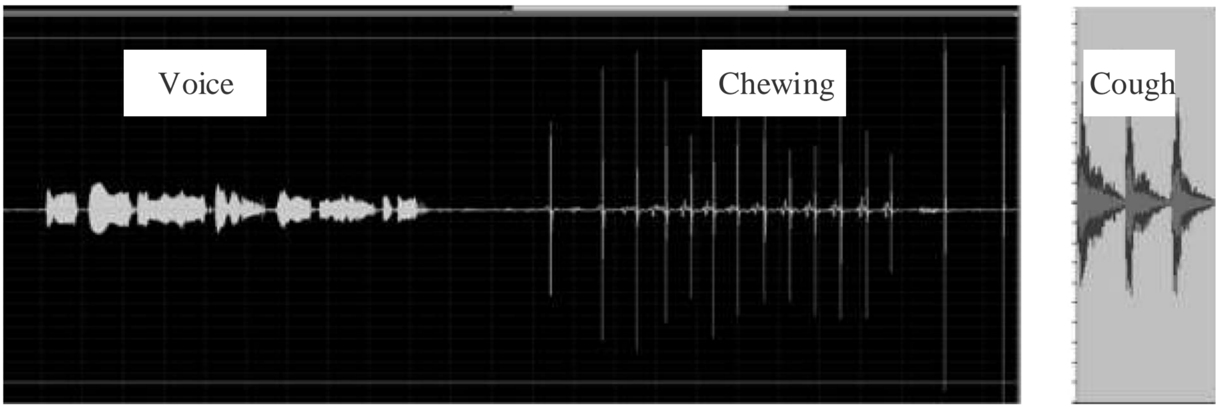


FIG. 2

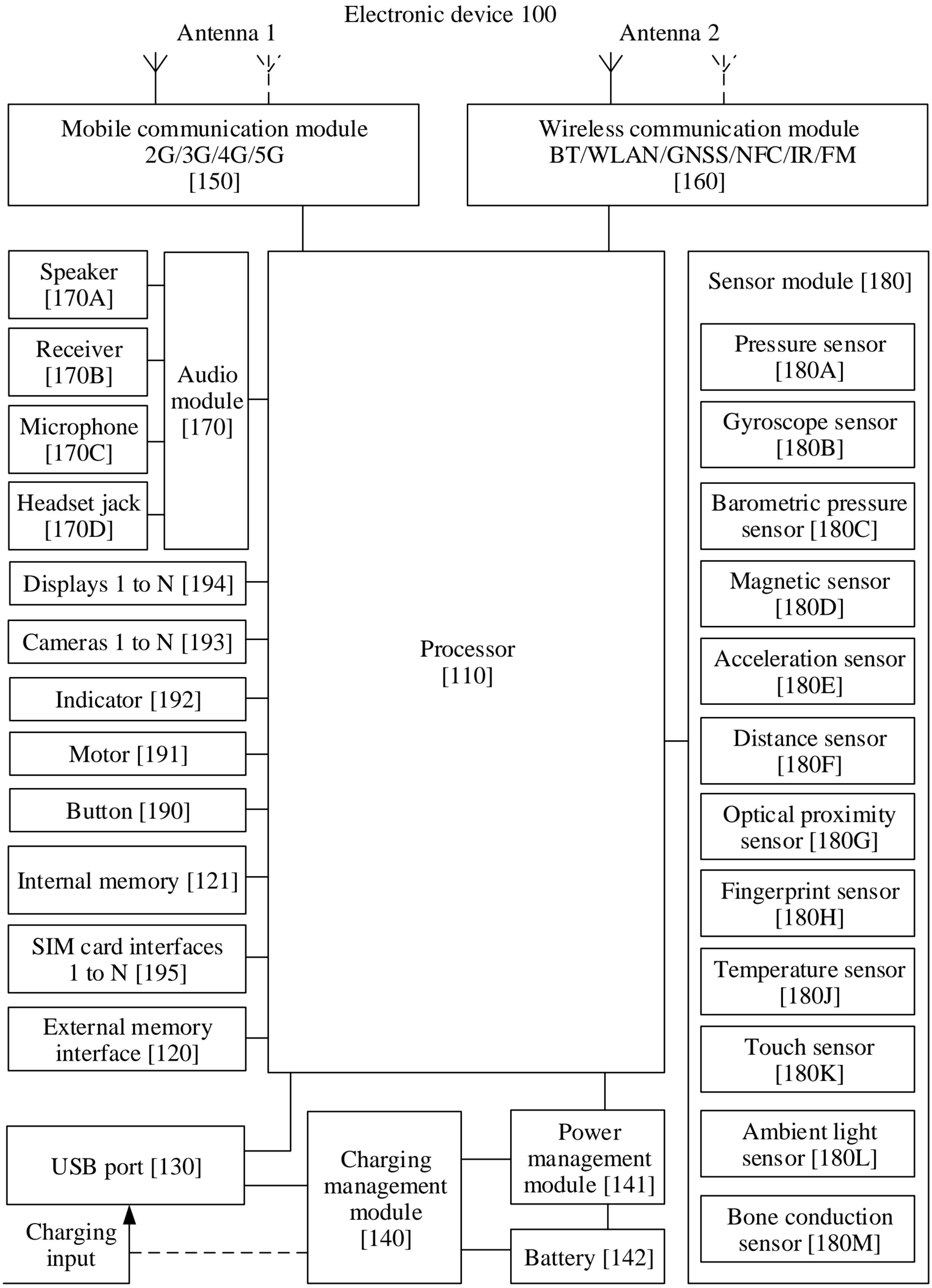
Electronic device 100
Antenna 1
Antenna 2
Mobile communication module 2G/3G/4G/5G [150]
Wireless communication module BT/WLAN/GNSS/NFC/IR/FM [160]
Speaker [170A]
Receiver [170B]
Microphone [170C]
Headset jack [170D]
Audio module [170]
Displays 1 to N [194]
Cameras 1 to N [193]
Indicator [192]
Motor [191]
Button [190]
Internal memory [121]
SIM card interfaces 1 to N [195]
External memory interface [120]
Processor [110]
Sensor module [180]
Pressure sensor [180A]
Gyroscope sensor [180B]
Barometric pressure sensor [180C]
Magnetic sensor [180D]
Acceleration sensor [180E]
Distance sensor [180F]
Optical proximity sensor [180G]
Fingerprint sensor [180H]
Temperature sensor [180J]
Touch sensor [180K]
Ambient light sensor [180L]
Bone conduction sensor [180M]
USB port [130]
Charging input
Charging management module [140]
Power management module [141]
Battery [142]

FIG. 3

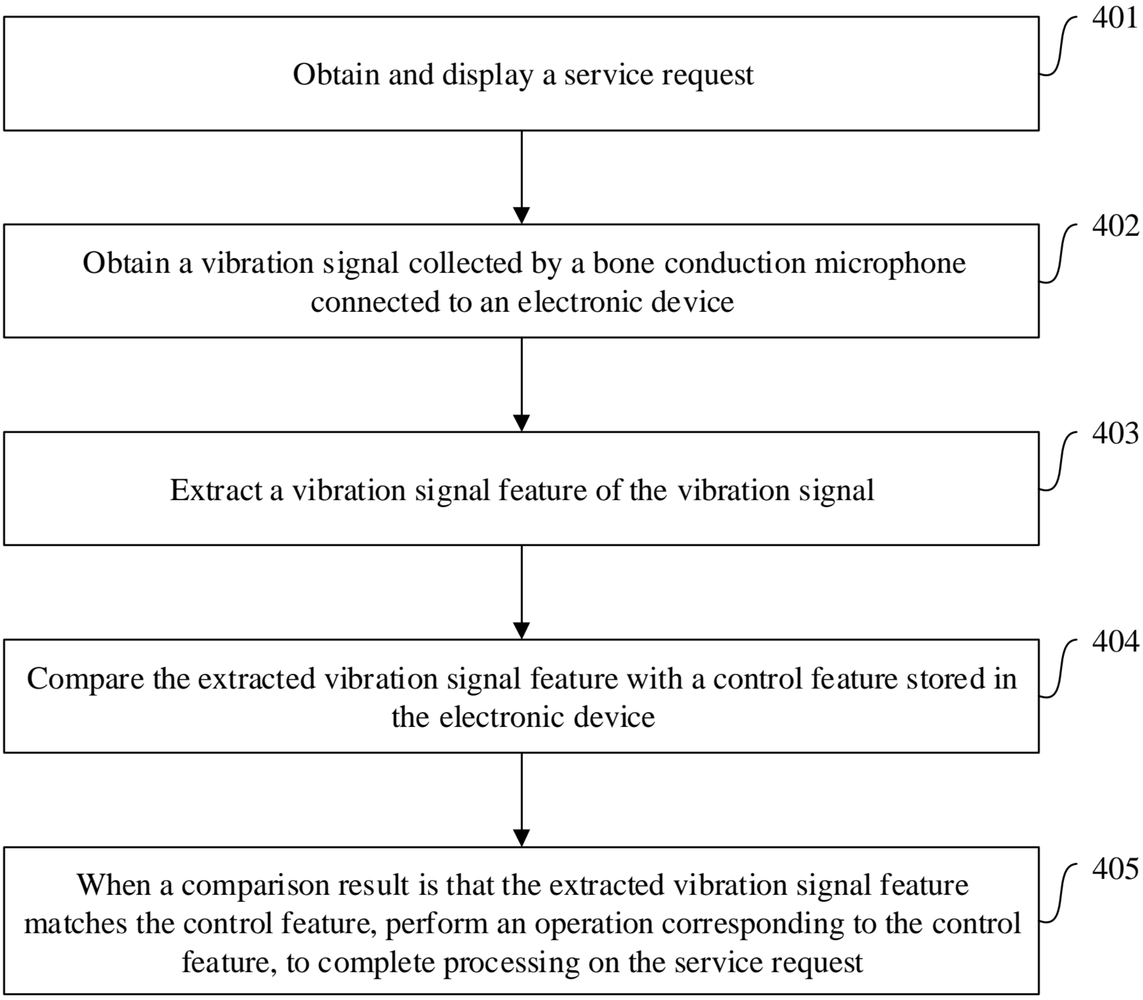
401
Obtain and display a service request
402
Obtain a vibration signal collected by a bone conduction microphone connected to an electronic device
403
Extract a vibration signal feature of the vibration signal
404
Compare the extracted vibration signal feature with a control feature stored in the electronic device
405
When a comparison result is that the extracted vibration signal feature matches the control feature, perform an operation corresponding to the control feature, to complete processing on the service request

FIG. 4

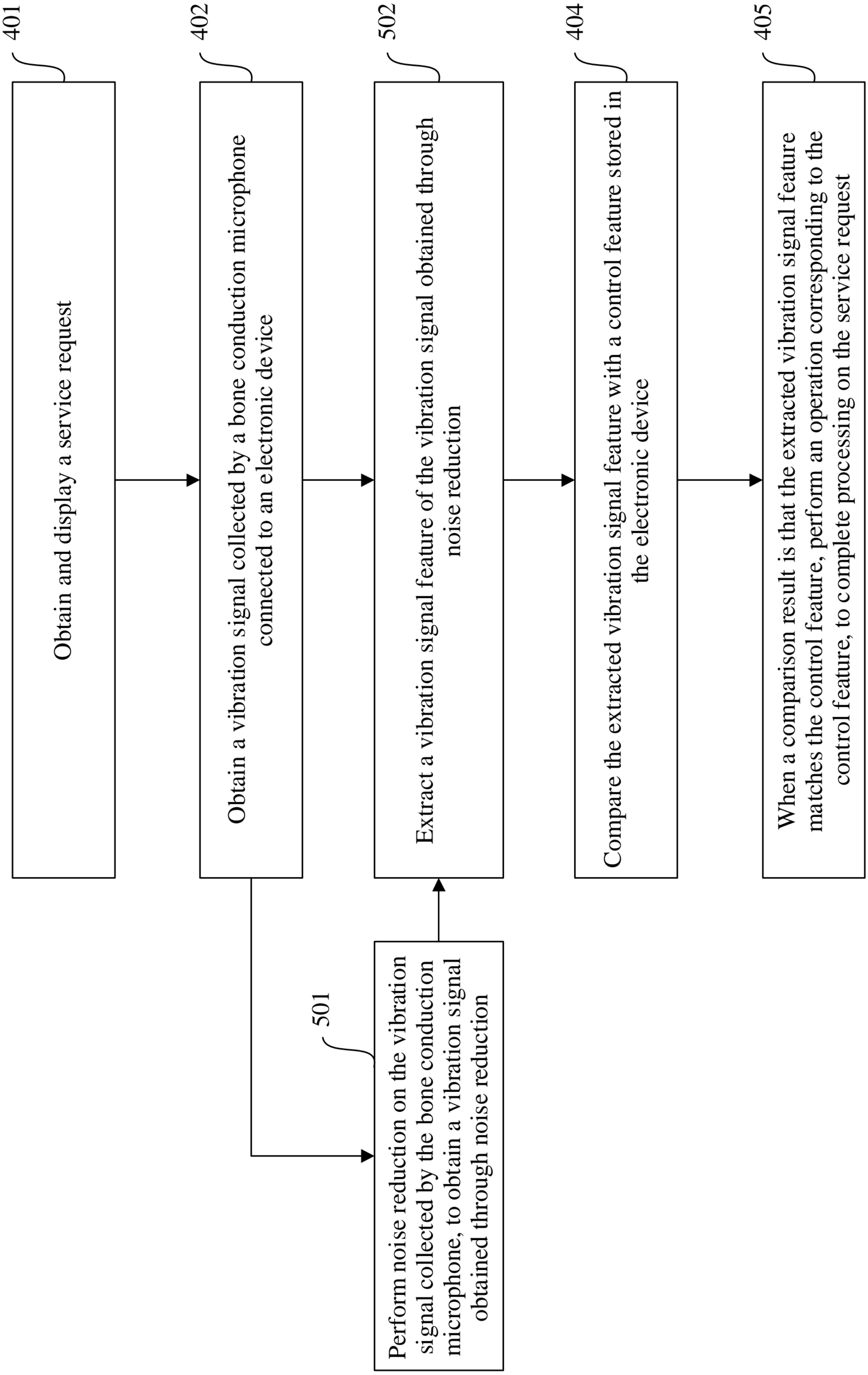
401
Obtain and display a service request
402
Obtain a vibration signal collected by a bone conduction microphone connected to an electronic device
501
Perform noise reduction on the vibration signal collected by the bone conduction microphone, to obtain a vibration signal obtained through noise reduction
502
Extract a vibration signal feature of the vibration signal obtained through noise reduction
404
Compare the extracted vibration signal feature with a control feature stored in the electronic device
405
When a comparison result is that the extracted vibration signal feature matches the control feature, perform an operation corresponding to the control feature, to complete processing on the service request

FIG. 5

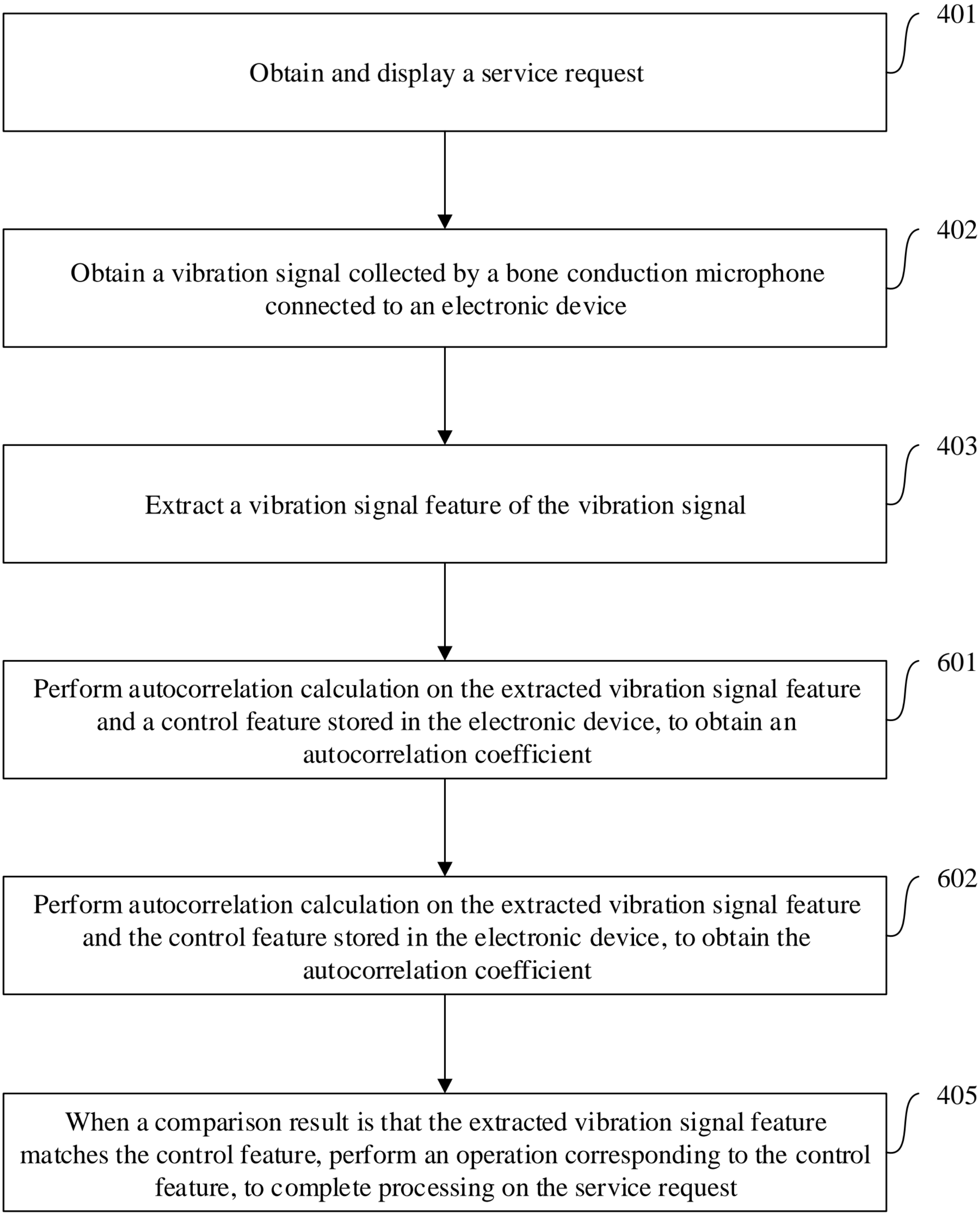
401
Obtain and display a service request
402
Obtain a vibration signal collected by a bone conduction microphone connected to an electronic device
403
Extract a vibration signal feature of the vibration signal
601
Perform autocorrelation calculation on the extracted vibration signal feature and a control feature stored in the electronic device, to obtain an autocorrelation coefficient
602
Perform autocorrelation calculation on the extracted vibration signal feature and the control feature stored in the electronic device, to obtain the autocorrelation coefficient
405
When a comparison result is that the extracted vibration signal feature matches the control feature, perform an operation corresponding to the control feature, to complete processing on the service request

FIG. 6

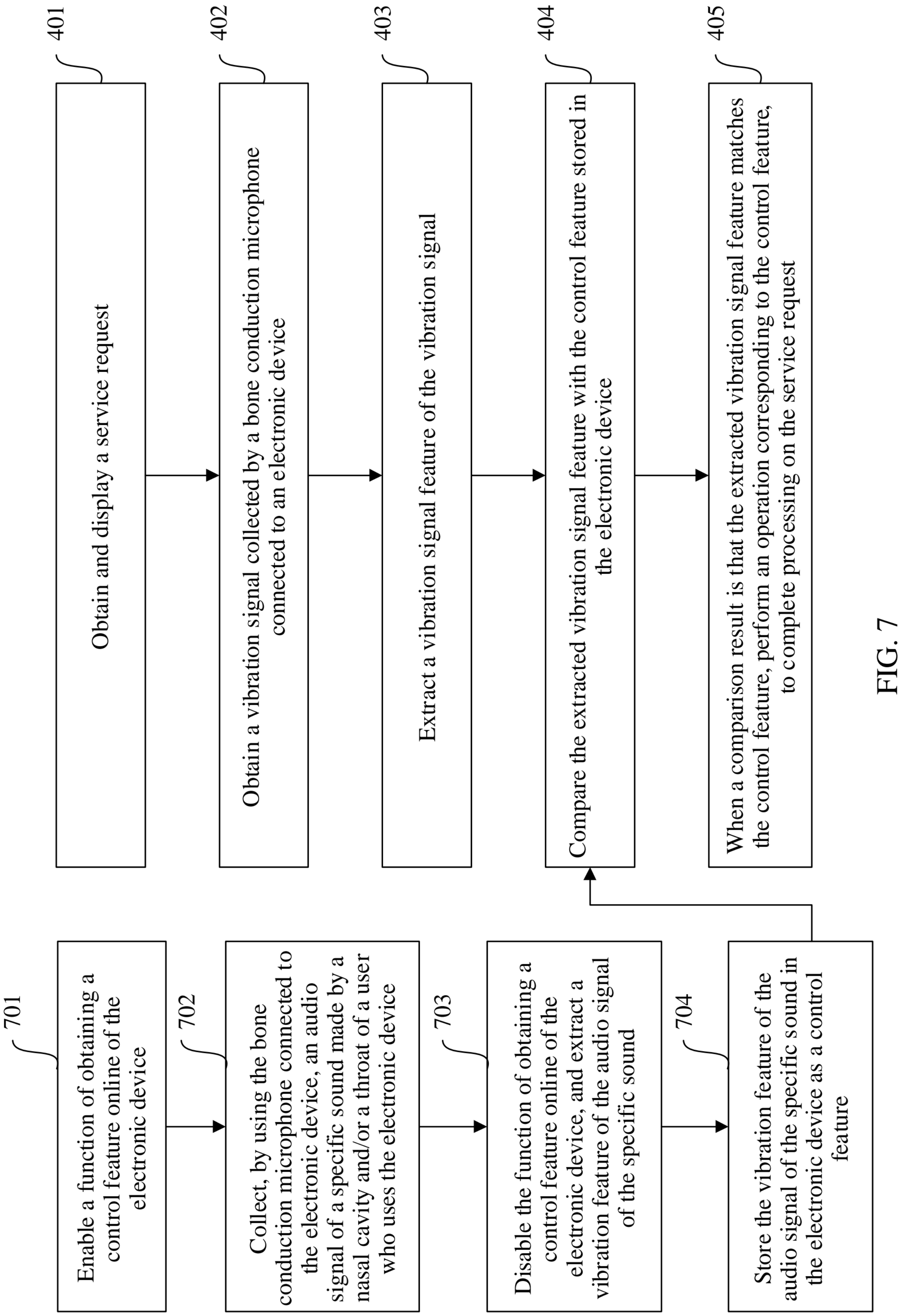
701
Enable a function of obtaining a control feature online of the electronic device
702
Collect, by using the bone conduction microphone connected to the electronic device, an audio signal of a specific sound made by a nasal cavity and/or a throat of a user who uses the electronic device
703
Disable the function of obtaining a control feature online of the electronic device, and extract a vibration feature of the audio signal of the specific sound
704
Store the vibration feature of the audio signal of the specific sound in the electronic device as a control feature
401
Obtain and display a service request
402
Obtain a vibration signal collected by a bone conduction microphone connected to an electronic device
403
Extract a vibration signal feature of the vibration signal
404
Compare the extracted vibration signal feature with the control feature stored in the electronic device
405
When a comparison result is that the extracted vibration signal feature matches the control feature, perform an operation corresponding to the control feature, to complete processing on the service request

FIG. 7

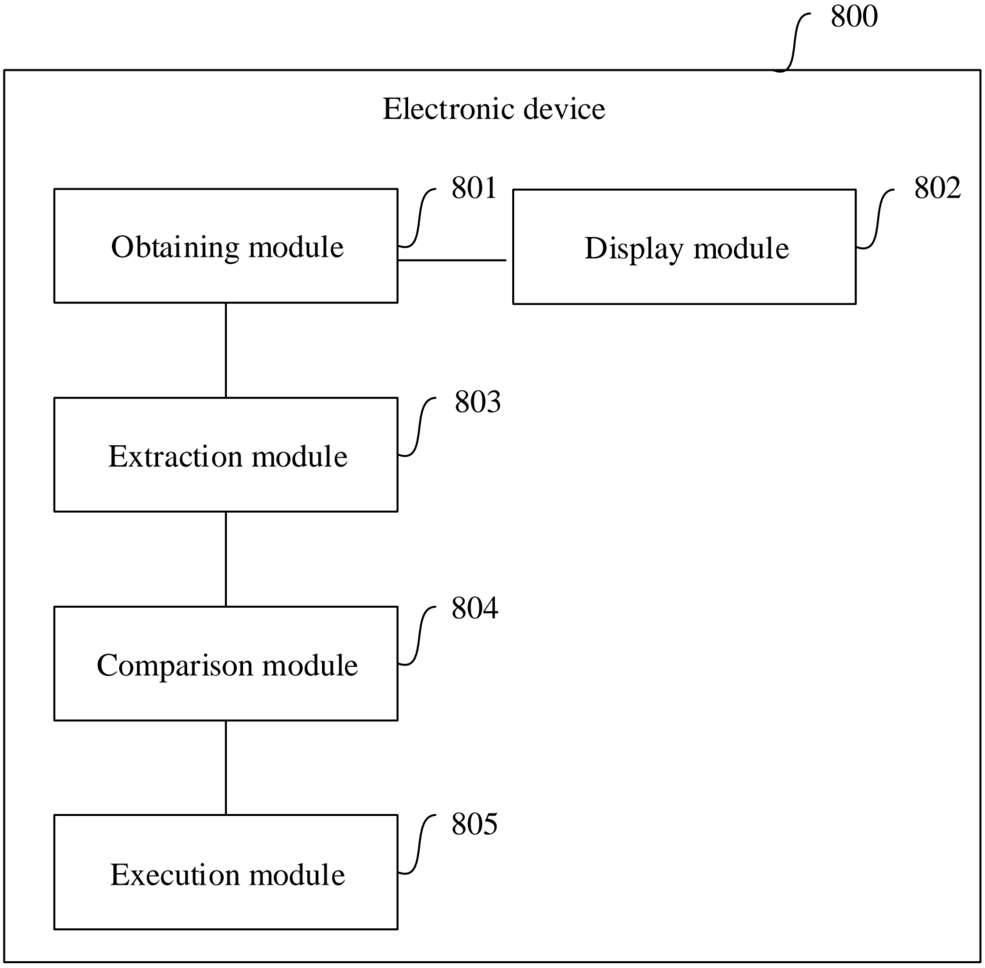
800
Electronic device
Obtaining module
801
Display module
802
Extraction module
803
Comparison module
804
Execution module
805

FIG. 8

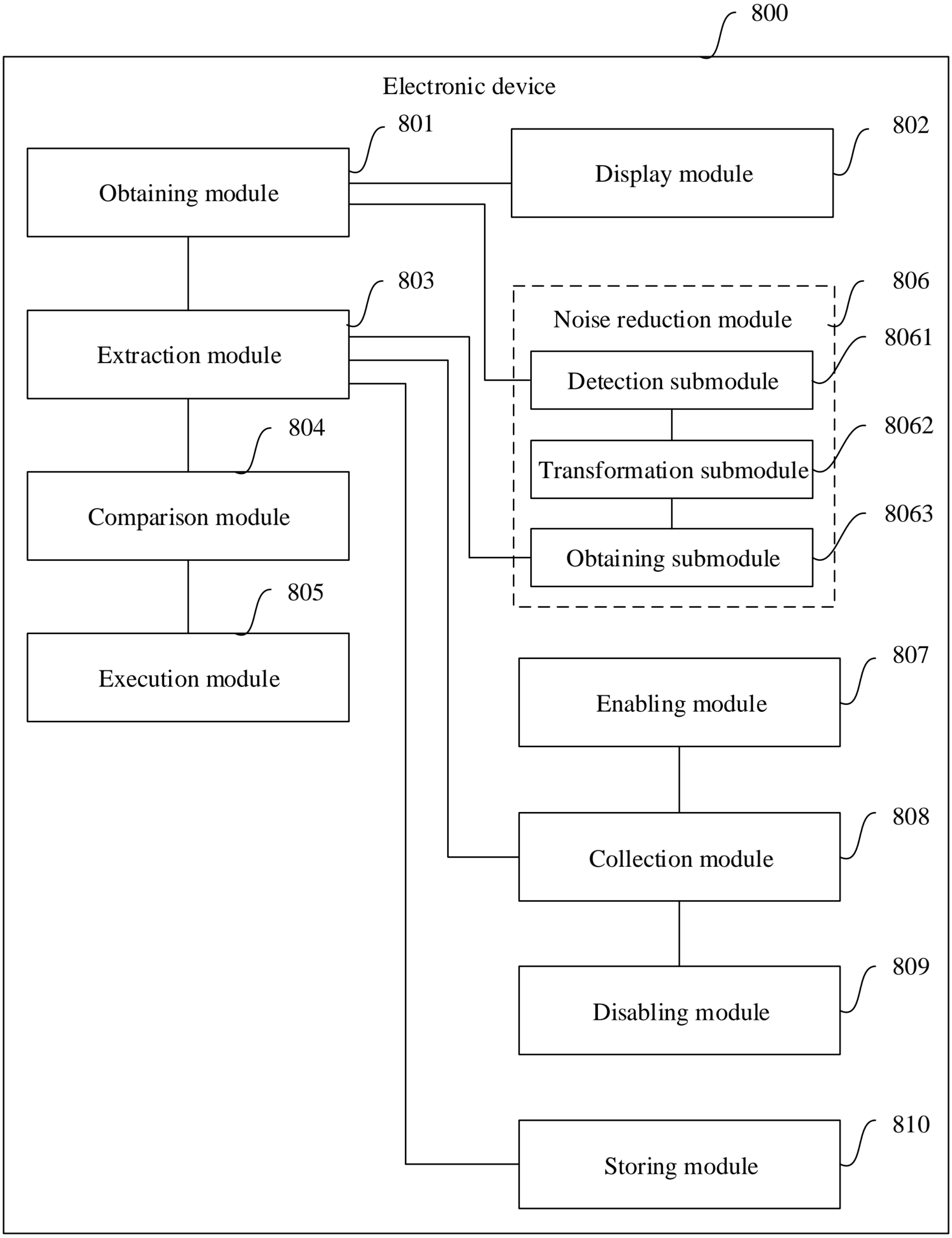
800
Electronic device
801
Obtaining module
802
Display module
803
Extraction module
806
Noise reduction module
8061
Detection submodule
8062
Transformation submodule
8063
Obtaining submodule
804
Comparison module
805
Execution module
807
Enabling module
808
Collection module
809
Disabling module
810
Storing module

FIG. 9

## INTERNATIONAL SEARCH REPORT

International application No.
**PCT/CN2024/075397**

**A. CLASSIFICATION OF SUBJECT MATTER**

H04R3/00(2006.01)i

According to International Patent Classification (IPC) or to both national classification and IPC

**B. FIELDS SEARCHED**

Minimum documentation searched (classification system followed by classification symbols)

IPC: H04R

Documentation searched other than minimum documentation to the extent that such documents are included in the fields searched

Electronic data base consulted during the international search (name of data base and, where practicable, search terms used)

CNTXT, ENTXT, DWPI, ENTXTC, CJFD: 骨导, 骨传导, 鼻腔, 喉咙, 皮肤, 振动, 信号, 特征, 匹配, 操作, 业务, 请求, 麦克风, microphone, bone, vibration, signal, skin, nasal, throat, feature, match, operation, service, request

**C. DOCUMENTS CONSIDERED TO BE RELEVANT**

| Category* | Citation of document, with indication, where appropriate, of the relevant passages | Relevant to claim No. |
|---|---|---|
| X | US 2018324518 A1 (APPLE INC.) 08 November 2018 (2018-11-08) description, paragraphs [0025]-[0093] | 1-20 |
| A | CN 110110616 A (CHUMEN WENWEN INFORMATION TECHNOLOGY CO., LTD.) 09 August 2019 (2019-08-09) entire document | 1-20 |
| A | CN 114360206 A (HONOR TERMINAL CO., LTD.) 15 April 2022 (2022-04-15) entire document | 1-20 |
| A | US 2014270231 A1 (APPLE INC.) 18 September 2014 (2014-09-18) entire document | 1-20 |

☐ Further documents are listed in the continuation of Box C.    ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 April 2024** | **19 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2024/075397**

| Patent document cited in search report | | | Publication date (day/month/year) | Patent family member(s) | | | Publication date (day/month/year) |
|---|---|---|---|---|---|---|---|
| US | 2018324518 | A1 | 08 November 2018 | US | 2021377650 | A1 | 02 December 2021 |
| | | | | US | 2019253785 | A1 | 15 August 2019 |
| CN | 110110616 | A | 09 August 2019 | WO | 2020211467 | A1 | 22 October 2020 |
| CN | 114360206 | A | 15 April 2022 | None | | | |
| US | 2014270231 | A1 | 18 September 2014 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310149294